# EUROPEAN PATENT APPLICATION

(11) **EP 4 648 025 A1**
(43) Date of publication of application: **12.11.2025**
(21) Application number: 24186549.2
(22) Date of filing: 04.07.2024
(51) Int. Cl.: G06V 20/58, G06V 10/25, G06V 10/44

(54) **MONITORING METHOD FOR SAFE AREA AND SAFETY SYSTEM AND DISPLAYING METHOD THEREOF**

(30) Priority: 09.05.2024 TW 113117218
(71) Applicant: Whetron Electronics Co., Ltd., New Taipei City 235 (TW)
(72) Inventor: WU, Jeng-Yan, 235 New Taipei City (TW); LI, Yu-Ting, 235 New Taipei City (TW); WU, Guan-Yi, 235 New Taipei City (TW); LIN, Shao-Yuan, 235 New Taipei City (TW); LEE, Jia-Lin, 235 New Taipei City (TW)
(74) Representative: Louis Pöhlau Lohrentz

(57) **Abstract**

A monitoring method for a safe area, performed by a processing module (2) having a processor and a pre-established image identification model, includes the following steps. An input image (I) is generated corresponding to a predefined viewing direction of a driving target (T), and the input image (I) has an image corresponding to an obstacle (O). A safe area (SA) is generated in the input image (I). A predetermined route (R) is generated, and a continuous area that does not belong to the obstacle from a predetermined range extended from the predetermined route (R) is defined to generate a modified area (MA), so that in a situation that the predetermined range includes a part of an obstacle (O), a part of a boundary of the modified area (MA) corresponds to a part of a contour of the obstacle (O). Then a step is executed to determine whether the safe area (SA) is entirely included in the modified area (MA).

## Description

### BACKGROUND OF THE INVENTION

### 1. Field of the Invention

The present invention relates to a monitoring method for a conveyance, and in particular, to a monitoring method for a safe area of a conveyance, and a safety system and a displaying method thereof.

### 2. Description of the Related Art

In the conventional driving safety monitoring, a road conveyance (such as a vehicle/car) is used as an example. One or more identified objects are distinguished from a driving target (that is, a driven vehicle) by using technologies such as object detection and/or semantic segmentation. Wherein, an area on a periphery of the driving target is defined as a safe area, and then it is determined whether a boundary of any identified object invades the safe area so as to avoid a collision between the driving target and the identified object. Since the identified object is an object that the driving target needs to avoid colliding with, the identified objects can also be generally referred to as an obstacle.

However, in the conventional anti-collision system (which has a corresponding monitoring method for a safe area), since in the process of image identification of the obstacle (that is, the identified object), especially in the case of simply using an object detection technology, a difference may exist between an identified obstacle area/boundary generated by a corresponding obstacle image and a real area/boundary of a real obstacle, and the identified obstacle area is always larger than its corresponding real area. Consequently, in the process of determining whether the driving target collides with the obstacle, the corresponding monitoring method/anti-collision system is excessively sensitive (because the identified obstacle area will invade the safe area easier than the real area) to generate erroneous determination/false warning more frequently, and the subsequent unnecessary safety mechanism (for example, generating a warning sound, or controlling the driving target to slow down or accelerate and/or deviate from the original driving direction) will be triggered in response to the erroneous determination, which may disturb the driver or even endanger driving safety due to disruption or interruption in the driving process.

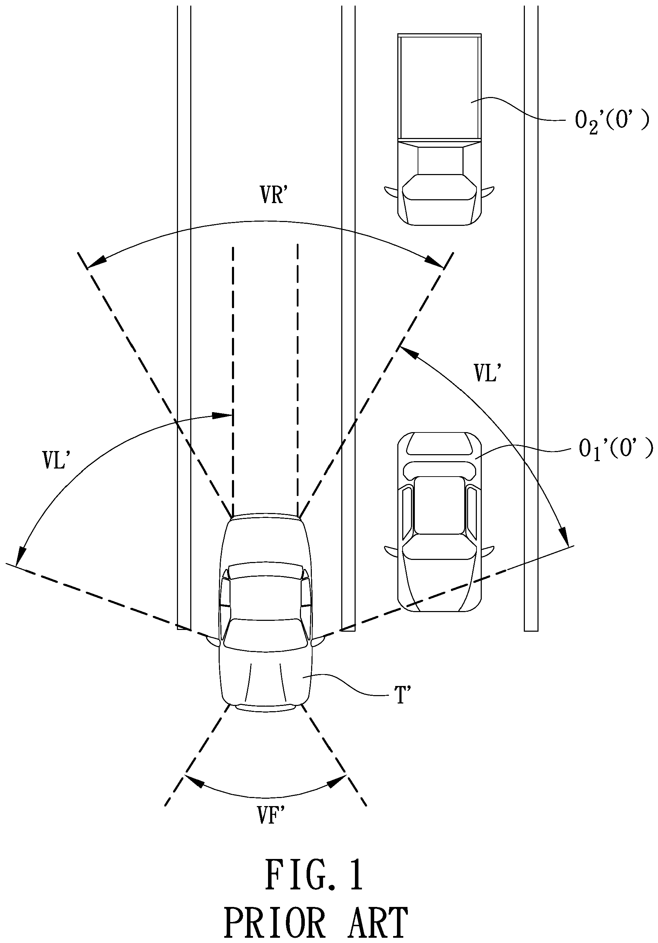

For example, FIG. 1 shows various directional images of a driving target T' (such as a driven vehicle) that may be captured by image capturing units (such as cameras) installed on various positions and angles of the vehicle body of the driving target T' during driving. Said various directional images include a front viewing direction VF', one or more lateral viewing directions VL', and a rear viewing direction VR' of the corresponding body. For ease of understanding of the technical content of the present invention, the lateral viewing direction VL' of the vehicle body with an image range in a lateral rear direction is described as an example, but it should still include a direct lateral viewing direction and a viewing direction that deviates from the direct lateral viewing direction by an appropriate adjustment in direction/angle (such as a lateral front viewing direction which is a lateral viewing direction with more front viewing direction or a lateral rear viewing direction which is a lateral viewing direction with more rear viewing direction).

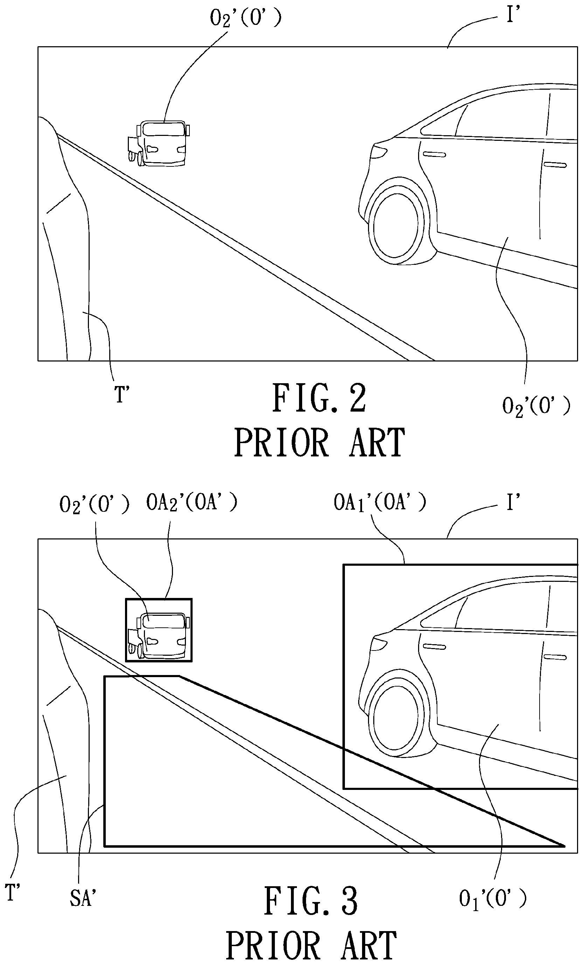

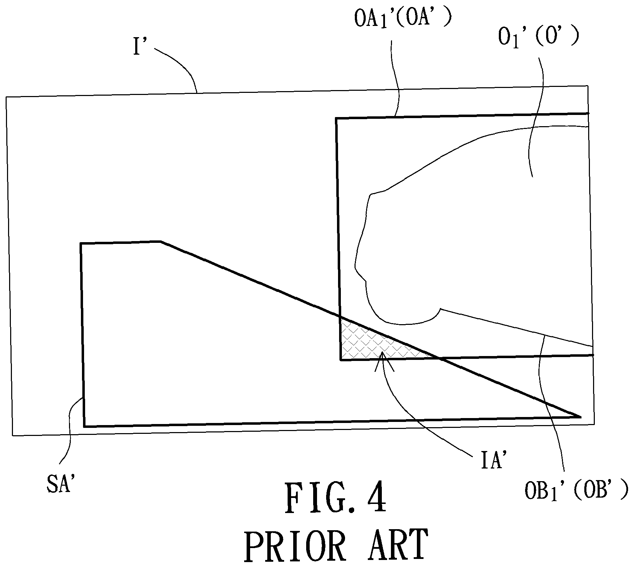

Referring to FIGs. 2-4, FIG. 2 shows an input image I' captured from a lateral viewing direction VL' with other obstacles O' (such as other vehicles) in FIG. 1. FIG. 3 shows that the conventional anti-collision system correspondingly generates a safe area SA' based on the driving target T' in the input image I', and correspondingly generates an obstacle area OA' (which corresponds to the identified obstacle area described above) based on the identified obstacle O'. An obstacle O' closer to the driving target T' is defined as a first obstacle O₁' and has a corresponding obstacle area OA₁', and an obstacle O' far away from the driving target T' is defined as a second obstacle O₂' and has a corresponding obstacle area OA₂'. FIG. 4 shows the relationships among the safe area SA', the obstacle area OA₁'/OA' and an obstacle boundary OB₁'/OB' of the obstacle O₁'/O'. The obstacle boundary OB' is defined by a boundary/contour of an obstacle O'; particularly, the obstacle boundary OB₁' is used to represent an image boundary of the first obstacle O₁' in the captured image.

More specifically, based on the safe area SA' and the obstacle area OA' generated by the conventional system, the conventional system may also obtain relative positions and surrounding areas of the safe area SA' and the obstacle area OA' in the input image I' so as to determine whether any obstacle area OA' invades the safe area SA'. As an example shown in FIG. 4, in an actual situation, the obstacle boundary OB₁' corresponding to the first obstacle O₁' does not invade the safe area SA'. However, since a part of the obstacle area OA' of the first obstacle O₁' and a part of the safe area SA' are intersected/overlapped to form an intersection area IA', the corresponding conventional system will determine that the first obstacle O₁' has invaded the safe area SA' of the driving target T' thereby resulting in erroneous determination.

In light of the above, it is necessary to improve the conventional monitoring method for a safe area.

### SUMMARY OF THE INVENTION

To solve the above problems, it is an object of the present invention to provide a monitoring method for a safe area, which can improve accuracy and reliability of the monitoring method to further improve driving safety.

It is another object of the present invention to provide a safety system, which can improve accuracy and reliability of the monitoring method to further improve driving safety.

It is yet another object of the present invention to provide a displaying method, which can improve user experience.

As used herein, the term "all-directional images" are images that may be captured by an image capturing unit arranged on a driving target in various directions outward from the driving target. The term "various directions" are, for example, directions such as front, side (left and right) and rear. The term "lateral viewing direction" may be an image obtained in the outward direction from the driving target such as a direct lateral viewing direction, a lateral front viewing direction or a lateral rear viewing direction. It should be noted, although the present invention is described by monitoring a safe area generated from a vehicle lateral side (especially as the lateral rear viewing direction) in an input image as an example, the present invention may include and be applied to safe area generated in other directions, or may include and be applied to a complete surrounding/panoramic image synthesized/generated from images obtained from multiple viewing directions with a corresponding safe area.

As used herein, the term "a", "an" or "one" for describing the number of the elements and members of the present invention is used for convenience, provides the general meaning of the scope of the present invention, and should be interpreted to include one or at least one. Furthermore, unless explicitly indicated otherwise, the concept of a single component also includes the case of plural components.

As used herein, the term "coupling" throughout the present invention includes direct or indirect electrical and/or signal connections, which may be selected by a person with ordinary knowledge in the art based on usage requirements.

As used herein, the terms "system", "apparatus", "device", "module" and "unit" described throughout the present invention may collectively or individually include at least one "processor". The processor refers to various data processing devices with specific functions and implemented by hardware or a combination of hardware and software to process or analyze information and/or correspondingly generate control information. In addition, a corresponding data receiving or transmitting unit may be included to receive or transmit required data. In addition, a corresponding database or storage unit (especially a non-transient memory unit) may be included for reading and storing corresponding data. In particular, unless otherwise specifically excluded or contradicted, the processor may be a collection of multiple processors in an architecture based on a distributed system, which is used to include or represent processes, a mechanisms and results of information streaming among the multiple processors.

It should be noted, the image identification technologies (including an object detection technology, a semantic segmentation technology and the like) involved in the "object detection", "semantic segmentation" and "processing module" for image identification throughout the present invention are already known technologies and can be understood by a person with ordinary knowledge, in which diverse learning network architectures may be used to match corresponding models and algorithms, and images including labeled objects or classified features are used as training data for corresponding training and verification. In addition, contents such as "safe area", "obstacle area" and "determining whether an intersection exists between the above two areas" described throughout the present invention are also known in the art and can be understood by a person with ordinary knowledge.

A monitoring method for a safe area according to the present invention, performed by a processing module having a processor and a pre-established image identification model, includes the following steps. An input image is obtained. The input image is generated corresponding to a predefined viewing direction of a driving target, and the input image has an image corresponding to an obstacle. A safe area, corresponding to a periphery of the image of the driving target, is generated in the input image. A predetermined route on the periphery of the image of the driving target is generated, and a continuous area that does not belong to the obstacle from a predetermined range extended from the predetermined route is defined to generate a modified area, so that in a situation that the predetermined range includes a part of an obstacle, a part of a boundary of the modified area corresponds to a part of a contour of the obstacle. Then a step is executed to determine whether the safe area is entirely included in the modified area. In a result of the determination is that the safe area cannot be entirely included in the modified area, the obstacle has invaded the safe area.

A safety system according to the present invention is applied to a driving target and includes: an image capturing unit and a processing unit. The image capturing unit is arranged in the driving target and configured to obtain an input image of a peripheral environment of the driving target. The processing module, coupled to the image capturing unit, includes a processor and a pre-established image identification model and is configured to receive the input image and perform the monitoring method for a safe area of the present invention.

Therefore, by the generated modified area having a characteristic of being close to a boundary of the obstacle, the monitoring method for a safe area and the safety system thereof can be further more accurately determined whether an obstacle in the input image invades the safe area through a relationship between the safe area and the modified area, and hence a situation of erroneous determination can be reduced, and accuracy and reliability of the monitoring method and driving safety can be enhanced.

In an example, before the determining whether the safe area is entirely included in the modified area, the method further includes the following step. An obstacle area corresponding to the obstacle is generated by identifying the obstacle from the input image through the image identification model. A step is executed to determine whether an intersection exists between the safe area and the obstacle area. In a result of the determination is that the intersection exists, then a step is executed to determine whether the safe area is entirely included in the modified area. Therefore, through a two-stage determination of whether the obstacle invades the safe area, the monitoring method can be more accurately determined whether the obstacle in the input image has invaded the safe area, thereby improving the accuracy and reliability of the monitoring method and improving the driving safety.

In an example, a determining manner is applied to determine whether the safe area is entirely included in the modified area, and the determining manner is determining whether an area size mutually intersected by the modified area, the safe area and the obstacle area is equal to an area size intersected by the safe area and the obstacle area. Alternatively, the determining manner is determining whether an area size intersected by the modified area and the safe area is equal to an area size of the safe area. Alternatively, the determining manner is determining whether an intersection exists between a difference area and the safe area, and the difference area is defined by an area subtracting the modified area from the input image. In a result of said determining manners is that the sizes of the two areas are equal (which means that the shapes and positions of the two areas are matched and overlapped) or no intersection exists between the difference area and the safe area, it is determined that the obstacle does not invade the safe area. In a result of said determining manners is that the sizes of the two areas are not equal or an intersection exists between the difference area and the safe area, it is determined that the obstacle has invaded the safe area. Therefore, the monitoring method can be more accurately determined whether the obstacle in the input image has invaded the safe area, thereby improving the accuracy and reliability of the monitoring method and improving the driving safety.

In an example, in a process of generating the modified area, the continuous area is defined by all pixel points generated from each route pixel point on the predetermined route extending to a boundary pixel point in a first direction. Each boundary pixel point is defined by determining whether an extended pixel point extended by each route pixel point on the predetermined route in the first direction is an obstacle pixel point corresponding to the obstacle. In a situation that an extended pixel point extended by a route pixel point on the predetermined route in the first direction is determined as the obstacle pixel point, a boundary pixel point is defined by a pixel point adjacent to or directly belonging to the extended pixel point initially determined as the obstacle pixel point. In a situation that all extended pixel points extended by a route pixel point on the predetermined route in the first direction are determined not belonging to the obstacle pixel point, a boundary pixel point is defined by the extended pixel point determined as a pixel point on a boundary of the input image. The continuous area is defined by all of the route pixel points, the extended pixel points and the boundary pixel points to correspondingly generate the modified area. Therefore, by said method for generating the continuous area, a modified area, especially its contour and position, close to a boundary of an actual obstacle can be obtained, so that the monitoring method can more accurately determine whether the obstacle in the input image has invaded the safe area, thereby improving the accuracy and reliability of the monitoring method and improving the driving safety.

In an example, In the situation that the extended pixel point extended by the route pixel point on the predetermined route in the first direction is determined as the obstacle pixel point, the boundary pixel point is defined by another extended pixel point preceding the extended pixel point initially determined as the obstacle pixel point. Therefore, the modified area close to the boundary of the actual obstacle can be obtained, so that the monitoring method can more accurately determine whether the obstacle in the input image has invaded the safe area, thereby improving the accuracy and reliability of the monitoring method and improving the driving safety.

In an example, a range of the continuous area is limited in the safe area. Therefore, an operation amount of generating the continuous area can be reduced, thereby reducing requirements for corresponding hardware devices and/or improving operation efficiency.

In an example, an entirety or a part of an image area size of the safe area of the driving target changes with a driving condition, and the driving condition includes at least one of a traveling speed, a traveling direction, a current driving scene and a turning signal. Therefore, the driving safety can be improved by appropriately changing the safe area in various scenes.

In an example, the safety system further includes at least one of a warning device, a steering system, a braking system and a transmission system, coupled to the processing module. Therefore, by the safety system having corresponding apparatus and/or system, when an obstacle invades the safe area, the driving target can appropriately respond to improve the driving safety.

A displaying method according to the present invention includes the following steps. An information in the monitoring method for a safe area of the present invention is presented on a display. The information includes the input image, and further includes at least one of the safe area, an obstacle area of the obstacle, the modified area, and a difference area. The difference area is defined by an area subtracting the modified area from the input image.

Therefore, the displaying method of the present invention can provide multiple displaying methods on presenting the information for a driver to select and display information based on his/her requirements to improve user experience.

In an example, in a result of determination is that the safe area is not entirely included in the modified area, an area of an invading area, intersected by the difference area and the safe area, is continuously displayed or flashes with a preset color. Therefore, by continuously displaying or flashing the predetermined color to provide the driver with a prominent visual reminder to the invading area, the driver can notice a situation that the obstacle invades the safe area to determine whether there is a risk of collision more easily, thereby improving user experience and driving safety.

### BRIEF DESCRIPTION OF THE DRAWINGS

The present invention will become more fully understood from the detailed description given hereinafter and the accompanying drawings which are given by way of illustration only, and thus are not limitative of the present invention, and wherein:
FIG. 1 is a schematic top view showing that a driving target that may obtain images from various viewing directions through an image capturing unit.
FIG. 2 is a schematic diagram of the image obtained from a lateral viewing direction of the driving target shown in FIG. 1.
FIG. 3 is a schematic diagram according to FIG. 2 to show a corresponding safe area and a corresponding obstacle area generated by an image identification technology.
FIG. 4 is a schematic diagram according to FIG. 3 to show relationships among the safe area, the obstacle area and an obstacle boundary.
FIG. 5 is a schematic flowchart of a preferred embodiment of a monitoring method for a safe area according to the present invention.
FIG. 6 is a schematic diagram showing that no obstacle invades a safe area in the image from the lateral viewing direction of the driving target.
FIG. 7 is a schematic diagram showing that an obstacle invades a safe area in the image from the lateral viewing direction of the driving target.
FIG. 8 is a schematic diagram to show a mechanism on generating the modified area for FIGs. 6 and 7.

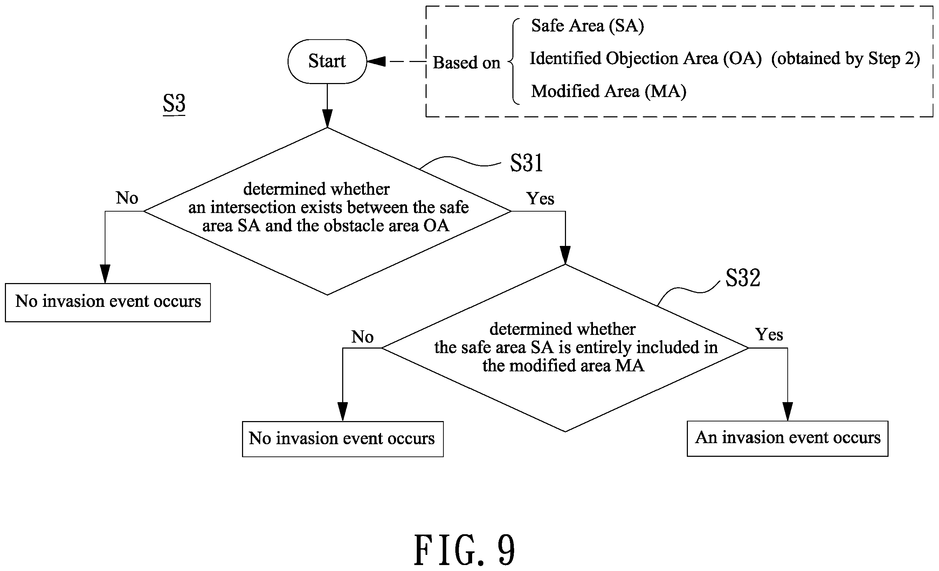

FIG. 9 is a schematic diagram to show a determination rule of the invasion event determining step shown in FIG. 5.
FIG. 10 is a schematic flowchart of another preferred embodiment of a monitoring method for a safe area according to the present invention.
FIG. 11 is a system block diagram of a preferred embodiment of a safety system according to the present invention.

In the various figures of the drawings, the same numerals designate the same or similar parts, and the description thereof will be omitted. Furthermore, when the terms "front", "rear", "left", "right", "up (top)", "down (bottom)", "inner", "outer", "side", and similar terms are used hereinafter, it should be understood that these terms have reference only to the structure or the feature shown in the drawings as it would appear to a person viewing the drawings, and are utilized only to facilitate describing the invention.

### DETAILED DESCRIPTION OF THE INVENTION

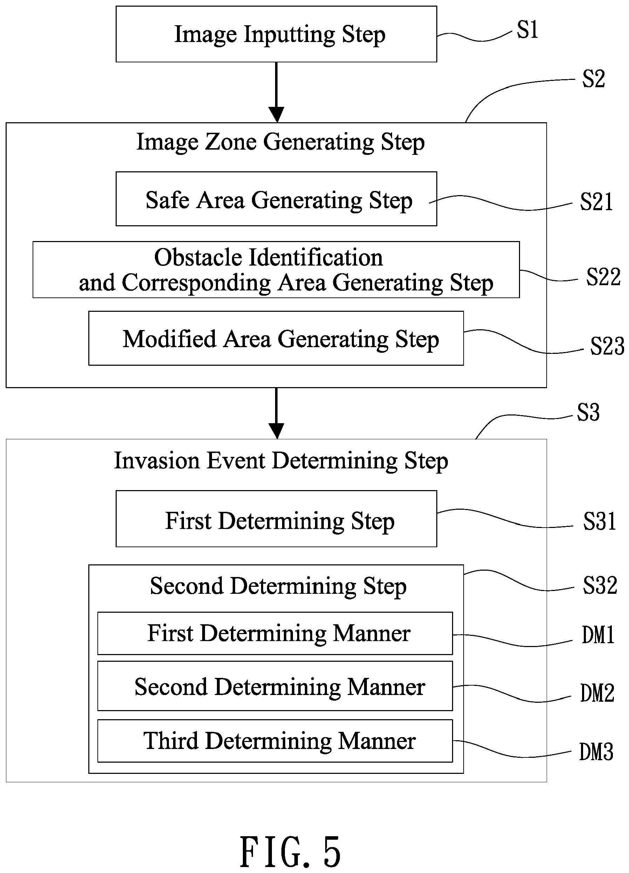

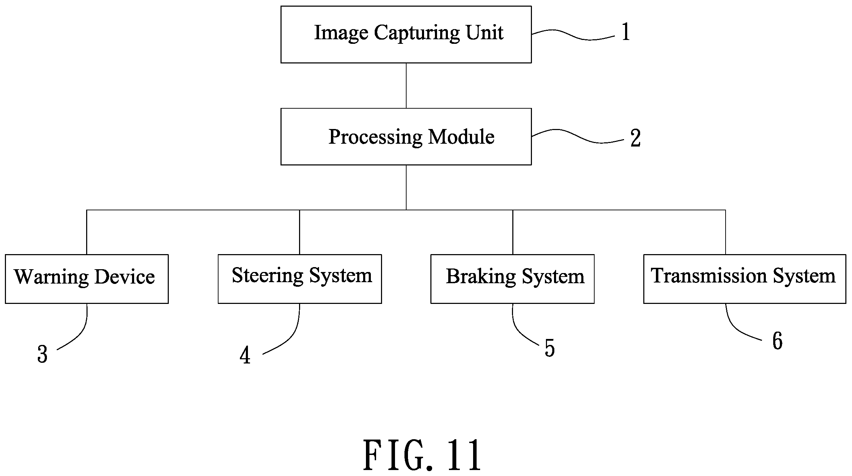

FIG. 5 shows a flowchart of a monitoring method for a safe area according to the present invention. The monitoring method for a safe area includes an image inputting step S1, an image zone generating step S2, and an invasion event determining step S3. In particular, the monitoring method for a safe area is performed by a processing module 2 (as shown in FIG. 11). The processing module 2 includes a processor and a pre-established image identification model.

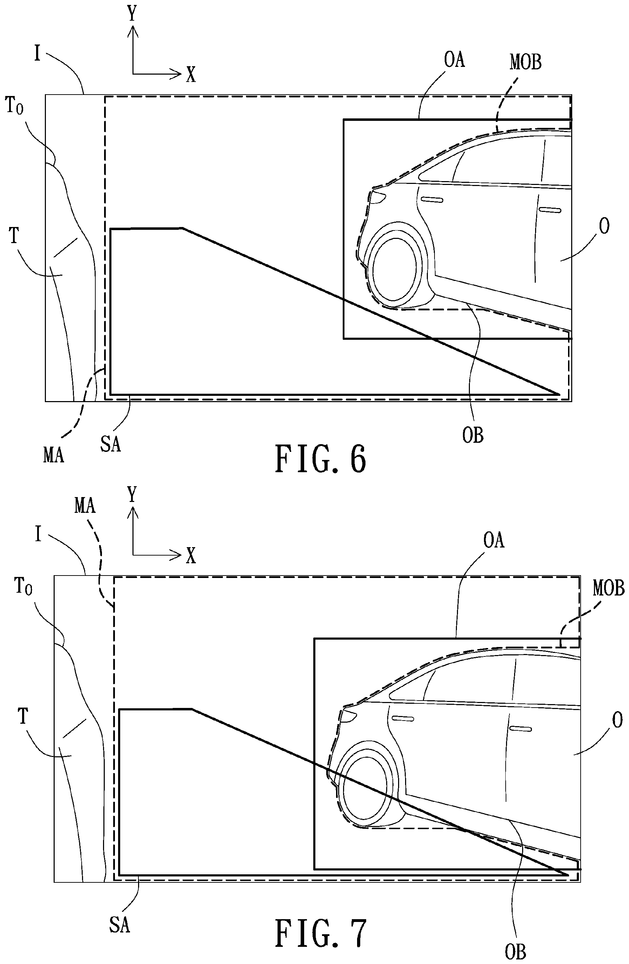

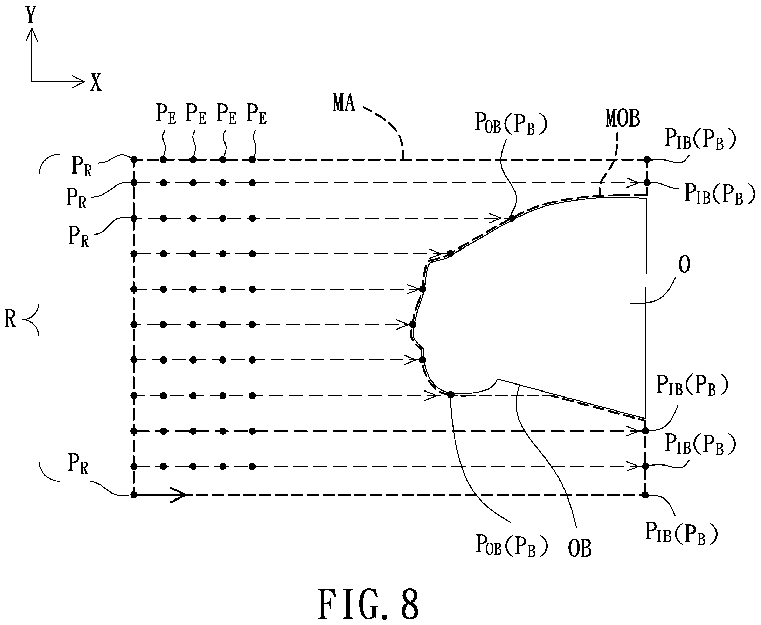

As shown in FIGs. 5-7, in the image inputting step S1, an input image I is obtained/inputted. The input image I is generated corresponding to a predefined viewing direction of a driving target T, and the input image I includes an image corresponding to an obstacle O. The predefined viewing direction is any one of a front viewing direction VF', a lateral viewing direction VL' and a rear viewing direction VR' as shown in FIG. 1, or may be an image (for example, a surrounding image or a panoramic image) synthesized/generated from images obtained from multiple viewing directions. To illustrate the technical content of this application, FIGs. 6 and 7 each shows a case with the input image I having the obstacle O on a side of the driving target T. Symbols "x" and "y" respectively represent a first direction and a second direction, and are especially used to illustrate a generation mechanism of a modified area MA in FIG. 8. More specifically, FIG. 6 shows that although an obstacle area OA of an obstacle O has invaded a safe area SA, the obstacle O has not actually invaded the safe area SA. FIG. 7 shows that an obstacle area OA of an obstacle O and the obstacle O has actually invaded a safe area SA. It should be noted, the input image I obtained in the image inputting step S1 simply shows corresponding images of the driving target T and the obstacle O. In other words, in the image inputting step S1, the safe area SA and the obstacle area OA have not yet been generated, and will be generated in the image zone generating step S2. In addition, it should be noted, the input image I may or may not include the image corresponding to the driving target T. In particular, in an example, the image of the driving target T may be eliminated through a corresponding image processing procedure, so that only the image corresponding to the obstacle O is presented in the input image I. Optionally, in another example, the image of the driving target T is displayed in the input image, so that the driver/user can understand a relationship between a conveyance (corresponding to the driving target T in the input image I) the driver is driving and an environment.

As shown in FIG. 5 to FIG. 7, the image zone generating step S2 includes a safe area generating step S21, an obstacle identification and corresponding area generating step S22, and a modified area generating step S23.

In the safe area generating step S21, a safe area SA is generated on a periphery of the image of the driving target T of the input image I based on a predefined safe area generation rule. Optionally, an entirety or a part of an image area size of the safe area SA may change (increase or decrease) with a driving condition. The driving condition includes at least one of a traveling speed, a traveling direction, a current driving scene and a turning signal of the driving target T. When the driving condition is the traveling speed of the driving target T, the entire image area size corresponding to the safe area SA is positively correlated with the traveling speed of the driving target T; or optionally, a part of the safe area SA of the driving target T, corresponding to a traveling direction of the traveling speed, has a larger image size than an image area size of the other part of the safe area SA in the non-traveling direction. For example, when the driving target T is stopped or moves at a first speed, the safe area SA has a first image area size, and when the driving target T moves at a second speed, the safe area SA has a second image area size. The first speed and the second speed each refers to a speed value or a speed range, and the second speed is greater than the first speed. The second image area size is greater than the first image area size, and especially an image area/range of the second image area size covers an image area/range of the first image area size. When the driving condition is a current driving scene where the driving target T located in, the image area size of the safe area SA may be changed based on the variations of the current driving scenes. For example, the image area size of the safe area SA is comparatively smaller during rush hour when numerous conveyances are crowded on the road; on a spacious and unobstructed highway, the image area size of the safe area SA is comparatively larger. When the driving condition is the turning signal of the driving target T, a part of the safe area SA of the driving target T, in the same direction with a turning direction of the driving target T, has a larger image area size than an image area size of the other part of the safe area SA in the reverse direction from the turning direction.

It should be noted, the input image I (correspondingly shown in FIGs. 6-7) is generated in a predefined manner; for example, the input image I is captured by an image capturing unit (such as a camera) installed at or around a rearview mirror of the vehicle as the driving target T, and is captured in a specific viewing direction (such as a lateral rear viewing direction). Since the installation position and viewing direction of the input image I are known and specific, the predefined safe area generation rule may be pre-established in a corresponding system (such as the processing module) for extending a contour To of the driving target T in the input image I by a specific distance range in a specific direction (which can be converted into corresponding pixel points in the input image I) to generate the safe area SA. Further, since the input image I in FIGs. 6-7 of the present invention is a perspective view in the lateral rear viewing direction captured by a corresponding image capturing unit 1 (as shown in FIG. 11), the safe area SA closer to the image capturing unit 1 has a larger length (a larger number of pixel points) in a first direction x. It should be noted, although the safe area SA shown in the drawings in the present invention has the same or similar specific shape, the shape of the safe area SA is not limited thereto.

In the obstacle identification and corresponding area generating step S22, the obstacle O is identified from the input image I by the pre-established image identification model, and an obstacle area OA corresponding to the obstacle O is generated. It should be noted, as described above, the image identification technology (such as the object detection technology or the semantic segmentation technology) used by the image identification model is the application of known technology, and hence details of the image identification technology and model are not described in this application.

Additionally to FIGs. 6-7, FIG. 8 shows that in the modified area generating step S23, a predetermined route R is generated on the periphery of the image of the driving target T based on a predefined modified area generation rule, and a continuous area that does not belong to or is different from the obstacle O is defined within a predetermined range extended from the predetermined route R to generate a modified area MA. In a situation that the obstacle O appears in the predetermined range, a part of a boundary of the modified area MA/continuous area corresponds to a part of a contour of the obstacle. Specifically, the part of the boundary of the modified area MA/continuous area and the part of the contour of the obstacle are corresponded in shape. In this way, the safe area SA can be entirely located in the modified area MA in a situation that no obstacle O exists or there is no obstacle O invading the safe area SA of the driving target T.

More specifically, the predetermined route R may be defined in any of the following manners. It should be noted, the examples of the predetermined route R are only parts of multiple feasible implementations, which are used to explain the content of the present invention more clearly, and the present invention is not limited thereto.
(1) The predetermined route R is defined by an outer peripheral side of the contour To of the driving target T in the input image I. Preferably, the predetermined route R extends from a bottom boundary of the input image I to a top boundary of the input image I. In this way, a modified area MA with a larger area can be obtained, which is helpful to providing more information about the obstacle boundary OB. The modified area MA in FIGs. 6-8 of the present invention is generated similarly in this way.
(2) The predetermined route R is defined by a boundary of the safe area SA close to the driving target T. In this way, the obstacle boundary OB obtained through the modified area MA with a smaller area is highly related to a range of the safe area SA, so that the corresponding operation amount can be reduced, and the corresponding hardware device requirements can be relatively reduced and/or operation efficiency can be improved.

More specifically, to describe the modified area generation rule more clearly, FIG. 8 illustrates the principle of generating the continuous area/modified area MA in the programmatical way on image processing, and the principle is described by using the predetermined route R with various defined pixel points. In the modified area generation rule, the continuous area is defined by all pixel points generated from each route pixel point P_{R} on the predetermined route R extending to a boundary pixel point P_{B} in a first direction x. The boundary pixel point P_{B} is defined by determining whether an extended pixel point P_{E} extended by each route pixel point P_{R} on the predetermined route R in the first direction x is an obstacle pixel point corresponding to the obstacle O. In a situation that an extended pixel point P_{E} extended by a route pixel point P_{R} on the predetermined route R in the first direction x is determined as the obstacle pixel point corresponding to the obstacle O, a boundary pixel point P_{B} is defined by another extended pixel point P_{E} preceding the extended pixel point P_{E} initially determined as the obstacle pixel point of the obstacle O. To facilitate understanding of the above technical contents, the boundary pixel point P_{B} is defined and displayed as an obstacle boundary pixel point P_{OB} as shown in FIG. 8. In a situation that all extended pixel points P_{E} extended by a route pixel point P_{R} on the predetermined route R in the first direction x is determined not belonging to the obstacle pixel point corresponding to the obstacle O, a boundary pixel point P_{B} is defined by the extended pixel point P_{E} determined as a pixel point on a boundary of the input image I. To facilitate understanding of the above technical contents, the boundary pixel point P_{B} is defined and displayed as an input image boundary pixel point P_{IB} as shown in FIG. 8. Therefore, the continuous area can be defined by all of said route pixel points P_{R}, said extended pixel points P_{E} and said boundary pixel points P_{B} to correspondingly generate the modified area MA.

It should be noted, in the situation that the extended pixel point P_{E} is initially determined as the obstacle pixel point, another extended pixel point P_{E}, preceding the extended pixel point P_{E} initially determined as the obstacle pixel point, is used as a boundary pixel point P_{B} in this example, so that any pixel point/feature corresponding to the obstacle O can be excluded from the continuous area/modified area MA; however, in another application, to expand or reduce the continuous area according to different requirements, a pixel point adjacent to or directly belonging to the extended pixel point P_{E} initially determined as the obstacle pixel point (a pixel point farther away from or closer to a side of the driving target T, or a pixel point just corresponding to the extended pixel point P_{E} initially determined as the obstacle pixel point) may be used as the boundary pixel point P_{B}. In addition, these variations should still be regarded within the scope of the present invention. As shown in FIG. 8, a thick dashed line is used to represent a contour of modified area MA which may include a modified obstacle boundary MOB. The modified obstacle boundary MOB is composed of a plurality of boundary pixel points P_{B} (particularly formed by the obstacle boundary pixel points P_{OB}), each of which is determined as a pixel point belonging to or corresponding to the obstacle O, and reflects a contour similar to or closer to an actual obstacle boundary OB of the obstacle O. In this example, the foregoing predetermined range is defined by extending from the predetermined route R in a predetermined direction (for example, the first direction x) to a boundary of the input image I.

In an alternative example (not shown), based on the mechanism for forming the predetermined range which is determined and defined by extending from the boundary pixel point P_{B} in the first direction x as described above, the predetermined range may be determined and defined by extending from the boundary pixel point P_{B} in the second direction y. More specifically, in said alternative example, a line segment by which a pixel point on an end of the predetermined route R extends in the first direction x acts as an auxiliary determination line segment, and an extended pixel point P_{E} belonging to or adjacent to (preferably preceding) the extended pixel point P_{E}, to which each pixel point on the auxiliary line segment extends in the second direction y that is initially determined as an obstacle pixel point of the obstacle O, is defined as a boundary pixel point P_{B}, or an extended pixel point P_{E} determined as a pixel point on the boundary of the input image I is defined as a boundary pixel point P_{B}, to define a corresponding modified obstacle area MA (including the input image boundary pixel points P_{IB} and the obstacle boundary pixel points P_{OB}) and/or a corresponding modified obstacle boundary MOB (formed by the obstacle boundary pixel points P_{OB}). Preferably, an updated modified area MA may be defined by overlapping/combining two modified areas MA respectively formed by extending in the first direction x and the second direction y from a respective one of the predetermined routes R, so that the modified obstacle boundary MOB of the updated modified area MA may be closer to the actual obstacle boundary OB of the obstacle O.

Optionally, to reduce the operation amount required to generate a continuous area, a range of the continuous area may be limited in the safe area SA; in other words, the pixel points corresponding to the continuous area and the defined modified area MA are all located within the safe area SA, and the boundary of the input image I is correspondingly defined/replaced by the boundary of the safe area SA. More specifically, in the process of generating/determining the continuous area, in the first direction x, at least one boundary of the safe area SA close to the periphery of the driving target T is used as the predetermined route R, and a boundary of the input image I is replaced by a boundary of the safe area SA away from the route pixel point P_{R}, to generate a modified area MA limited in the safe area SA. In this example, the foregoing predetermined range is defined by extending from the predetermined route R in a predetermined direction (for example, the first direction x) and to a boundary of the safe area SA.

It should be noted, the function of determining whether any pixel point of the obstacle O exists in the continuous area in step S23 may also be implemented through the pre-established image identification model of the foregoing processing module 2, and the image identification model can be understood by a person with ordinary knowledge in the art; hence details are not described in this application. In addition, the modified area MA includes not only a drivable area, but also a non-drivable area in some specific situations. A type of the drivable area is, for example, an asphalt road, a gravel road, a brick road, an earth-rock road or grass, which may be used for vehicles to travel. A type of the non-drivable area is, for example, a pavement such as a sidewalk or an arcade that is not used for vehicles to travel. The drivable area, the non-drivable area and the types thereof may be implemented through the corresponding image identification technology, and the corresponding types are preferably changed based on different situations.

It should be particularly noted, the method for generating the modified area MA proposed in the present invention may be implemented by, for example, using a regression analysis method in the image identification technology, and the operation efficiency may be greatly improved. For example, in the practical operation case, in the case of the same input image I having the obstacle O and other conditions being the same, calculation efficiency of the regression analysis technology and the semantic segmentation technology is compared and described as the following. An image with 640 pixels x 640 pixels is used as an example. An operation/calculation amount of floating point of the regression analysis technology is only 2.4 G, and an operation amount of floating point of the semantic segmentation technology is 34.2 G. In other words, the method for generating the modified area MA of the present invention may reduce the operation amount by 92.98% compared with the known semantic segmentation technology, and greatly improves the operation/calculation efficiency. In particular, according to the method for generating the modified area MA of the present invention, the modified obstacle boundary MOB which is most likely to invade the safe area SA can be found out by simply identifying the contours of the obstacle O adjacent to the safe area SA. Therefore, compared with the semantic segmentation technology for identifying the entire obstacle boundary OB of the obstacle O, the operation amount of the present invention can be greatly reduced. In particular, when the semantic segmentation technology is used to identify the boundary of an obstacle O, if a dimension of a corresponding input image I is reduced or a minimum identifiable pixel point with a large pixel size is used to improve the operation efficiency, the obtained identified obstacle boundary may cause more errors compared to the actual obstacle boundary OB. Compared to the error issue aroused by the semantic segmentation technology, the technology of generating the modified obstacle boundary MOB of the present invention is used in combination with the minimum identifiable pixel point with a small or smallest pixel size and may still have a faster processing efficiency, so that the obtained modified obstacle boundary MOB is closer to the actual obstacle boundary OB than the identified obstacle boundary obtained by the semantic segmentation technology.

Besides referring to FIGs. 5-7, and further referring FIG. 8, in the invasion event determining step S3, based on the safe area SA, the obstacle area OA and the modified area MA obtained in the foregoing corresponding area generating step S2, the invasion event determining step S3 includes a first determining step S31 and a second determining step S32 to more accurately determine whether the obstacle O invades the safe area SA.

In the first determining step S31, it is determined whether an intersection exists between the safe area SA and the obstacle area OA. If a result of the determination is no (that is, no intersection exists), it represents that no invasion event has occurred. If the result of the determination is yes (that is, the intersection exists), the second determining step S32 is performed.

In the second determining step S32, it is further determined whether the safe area SA is entirely included in the modified area MA, which is equivalent to determining whether an entirety or a part of the obstacle boundary OB of the modified area MA corresponding to the obstacle O is located in the safe area SA. If the result of the determination is that the safe area SA is entirely included in the modified area MA (corresponding to that the entirety of the obstacle boundary OB is located outside the safe area SA, as shown in FIG. 6), it represents that no invasion event has occurred. If the result of the determination is that the safe area SA cannot be entirely included in the modified area MA (corresponding to that the entirety or part of the obstacle boundary OB has invaded the safe area SA, as shown in FIG. 7), it represents that an invasion event has occurred, and it can be determined that the obstacle O indeed invades the safe area SA. In particular, when it is determined that the invasion event occurs, the corresponding system/processing module generates a corresponding invasion signal to further trigger a subsequent related safety mechanism.

More specifically, in the second determining step S32, a first determining manner DM1, a second determining manner DM2, or a third determining manner DM3 may be used to determine whether the obstacle really invades the safe area. The first determining manner DM1 is determining whether an area size mutually intersected by the modified area MA, the safe area SA and the obstacle area OA is equal to an area size intersected by the safe area SA and the obstacle area OA (which has the same meaning as "determining whether the safe area SA is entirely included in the modified area MA"). If the two area sizes are equal, it represents that the safe area SA is entirely included in the modified area MA, and the entirety of the obstacle boundary OB is located outside the safe area SA (as shown in FIG. 6), and it is determined that no invasion event has occurred. If the two area sizes are not equal, it represents that the safe area SA cannot be entirely included in the modified area MA, and the entirety or part of the obstacle boundary OB is located within the safe area SA (as shown in FIG. 7), and it is determined that the invasion event has occurred.

The second determining manner DM2 is determining whether an area size intersected by the modified area MA and the safe area SA is equal to an area size of the safe area SA. In other words, it is determined whether the modified area MA may entirely cover the safe area SA (which has the same meaning as "determining whether the safe area SA is entirely included in the modified area MA"). If the two area sizes are equal, it represents that the safe area SA is entirely included in the modified area MA, and the entirety of the obstacle boundary OB is located outside the safe area SA (as shown in FIG. 6), and it is determined that no invasion event has occurred. If the two area sizes are not equal, it represents that the safe area SA cannot be entirely included in the modified area MA, and the entirety or part of the obstacle boundary OB is located within the safe area SA (as shown in FIG. 7), and it is determined that the invasion event has occurred.

The third determining manner DM3 is determining whether an intersection exists between a difference area and the safe area SA (which has the same meaning as "determining whether the safe area SA is entirely included in the modified area MA"); wherein the difference area is defined by an area subtracting the modified area from the input image. If no intersection exists, it represents that the safe area SA is entirely included in the modified area MA, and the entirety of the obstacle boundary OB is located outside the safe area SA (as shown in FIG. 6), and it is determined that no invasion event has occurred. If the intersection exists, it represents that the safe area SA cannot be entirely included in the modified area MA, and the entirety or part of the obstacle boundary OB is located within the safe area SA (as shown in FIG. 7), and it is determined that the invasion event has occurred.

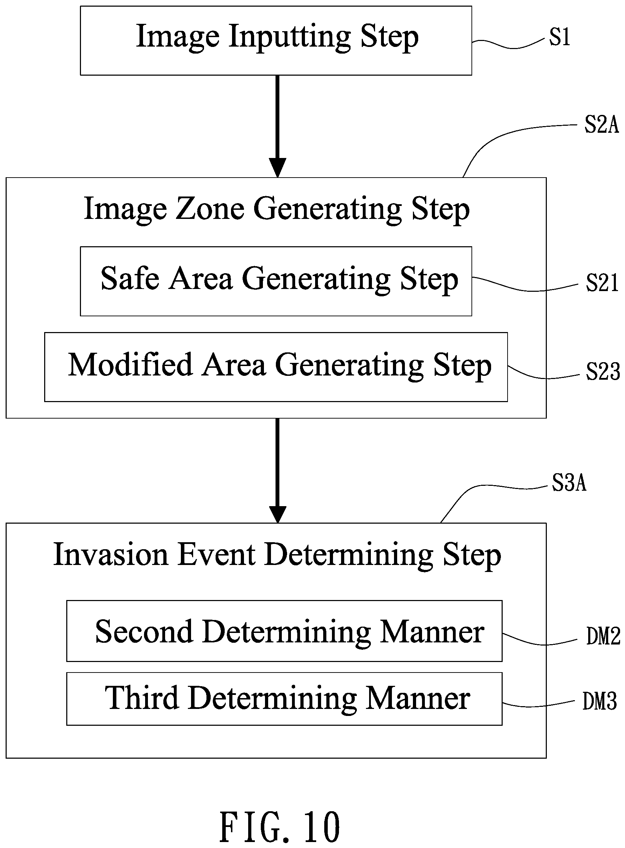

Alternatively, FIG. 10 shows another embodiment of a monitoring method for a safe area according to the present invention. Similar to the process of FIG. 5, the monitoring method also includes an image inputting step S1, and further includes an image zone generating step S2A and an invasion event determining step S3A. In the image zone generating step S2A, the image zone generating step S2A includes the safe area generating step S21 and the modified area generating step S23. In other words, the image zone generating step S2A eliminates/skips the foregoing obstacle area generating step S22. In the invasion event determining step S3A, one of the second determining manner DM2 and the third determining manner DM3 may be directly applied in the single determining step S30A (corresponding to the second determining step S32), so that it can directly make the accurate determination on whether the obstacle O invades the safe area SA. In other words, the invasion event determining step S3A eliminates the first determining step S31. Therefore, comparing with the method of FIG. 5, the method of FIG. 10 omits the obstacle area generating step S22 and the first determining step S31, so that efficiency of overall image identification analysis and safe area monitoring can be further improved.

As shown in FIG. 11, to implement the foregoing monitoring methods for a safe area (as shown in FIG. 5 and FIG. 10), a safety system may be correspondingly configured in the present invention. The safety system is configured on a driving target T, includes an image capturing unit 1 and a processing module 2, and optionally includes at least one of a warning device 3, a steering system 4, a braking system 5 and a transmission system 6. The processing module 2 is coupled to one or more of the image capturing unit 1, the warning device 3, the steering system 4, the braking system 5 and the transmission system 6 to perform functions such as transmission, receiving, reading, storage, operation or control of corresponding data in the safety system.

At least one image capturing unit 1 is arranged on the driving target T, and is configured to obtain an input image I of a peripheral environment of the driving target T. The input image I may be an image corresponding to various viewing directions in FIG. 1, for example, an image corresponding to at least one of a front viewing direction VF', a lateral viewing direction VL' and a rear viewing direction VR', or an image generated from images obtained from the multiple viewing directions, especially a surrounding image.

The processing module 2 includes a processor and is coupled to the image capturing unit 1 so as to be configured to receive the input image I and perform the above-mentioned monitoring method for a safe area (as shown in FIGs. 5 and 10) to determine whether any obstacle O invades the safe area SA of the driving target T. The processing module 2 includes a pre-established/pre-trained image identification model, so that when an obstacle O exists in the input image I, the obstacle O may be identified and the corresponding obstacle area OA is generated, and the modified area generating step S23 can be performed to obtain the modified area MA. In a situation that the processing module 2 determines that the safe area SA cannot be entirely included in the modified area MA (that is, the obstacle O invades the safe area SA), the processing module 2 transmits/sends a warning information to at least one of the warning device 3, the steering system 4, the braking system 5 and the transmission system 6 to trigger the corresponding safety mechanism. It should be noted , as described above, the functions of identifying the obstacle O and generating the corresponding obstacle area OA can be implemented by using a known image identification technology (an object detection technology and/or a semantic segmentation technology, especially the object detection technology).

The warning device 3 is provided with a speaker. When the warning device 3 receives the warning information, the speaker is triggered/controlled to make a corresponding sound, to remind a driver of a situation that an obstacle O invades the corresponding safe area SA (there is a risk of collision).

The steering system 4 is provided with a steering mechanism and a steering drive unit (such as a motor) for steering/turning of the driving target T. When the steering system 4 receives the warning information, the steering drive unit drives the steering mechanism to operate, so that the driving target T turns in a direction away from the obstacle O invading the safe area SA to reduce a risk that the obstacle O collides with the driving target T. By this obstacle avoid mechanism, even when a collision occurs, damage of the collision may be reduced to a certain extent, since the driving target T has made a preventive deflection from its original traveling direction. It should be noted, the steering system 4, the steering mechanism and the steering drive unit are application of the known technology and can be understood by a person with ordinary knowledge; hence details are not described in this application.

The braking system 5 is provided with a braking mechanism and a braking drive unit (such as a motor or a hydraulic pump) for deceleration of the driving target T. When the braking system 5 receives the warning information, the braking driving unit drives the braking mechanism to operate, so that the driving target T slows down or stops (to allow the obstacle O to pass in front of the driving target T), to reduce the risk that the obstacle O collides with the driving target T. By this obstacle avoid mechanism, even when a collision occurs, damage of the collision may be reduced to a certain extent. It should be noted, the braking system 5, the braking mechanism and the braking drive unit are application of the known technology and can be understood by a person with ordinary knowledge; hence details are not described in this application.

The transmission system 6 is provided with a transmission mechanism and a transmission drive unit (such as a motor or an engine) for acceleration of the driving target T. When the transmission system 6 receives the warning information, the transmission drive unit drives the transmission mechanism to operate, so that the driving target T travels faster (to cause the driving target T to move away from the obstacle O at a higher speed), to reduce the risk that the obstacle O collides with the driving target T. The transmission system 6, the transmission mechanism and the transmission drive unit are application of the known technology and can be understood by a person with ordinary knowledge; hence details are not described in this application.

In addition, based on the foregoing monitoring method for a safe area (as shown in FIGs. 5 and 10), the present invention proposes a display method for monitoring a safe area, which may be performed by a displaying device (not shown, especially installed in a driving target T) and includes at least one of a first display mode, a second display mode, a third display mode, a fourth display mode, a fifth display mode and a sixth display mode. Therefore, a driver/user may choose the preferred display mode based on his/her needs or habits to enhance user experience.

In the first display mode (as shown in FIG. 2), only an input image I is simply displayed. In this way, the driver may be provided with a clean image without any additionally generated auxiliary area. The auxiliary area refers to one or more of a safe area SA, an obstacle area OA, a modified area MA, and a difference area. The difference area is defined by an area subtracting the modified area MA, corresponding to an obstacle O, from the input image I.

In the second display mode (as shown in FIGs. 6-7), an input image I and a safe area SA are displayed. In this way, compared with the first display mode, the display of the safe area SA may be convenient for the driver to observe whether another obstacle O invades the safe area SA.

In the third display mode (as shown in FIGs. 6-7), an input image I and a safe area SA are displayed, and in a situation that an obstacle O exists in the input image I, an obstacle area OA of the obstacle O is further displayed. Compared with the second display mode, the obstacle area OA is additionally displayed to assist the driver aware of whether any obstacle O invades in the safe area SA more easily.

In the fourth display mode (as shown in FIGs. 6-7), an input image I and a safe area SA are displayed, and in a situation that an obstacle O exists in the input image I, an obstacle area OA of the obstacle O and a modified area MA are further displayed. Compared with the second display mode, the additional display of the obstacle area OA and the modified area MA is helpful to provide more real-time information to the driver, so that the driver can observe such real-time information and evaluate whether any obstacle O invades the safe area SA.

In the fifth display mode (as shown in FIGs. 6-7), an input image I and a safe area SA are displayed, and in a situation that an obstacle O exists in the input image I, a difference area corresponding to the obstacle O is further displayed. The difference area is defined by an area subtracting the modified area MA, corresponding to an obstacle O, from the input image I. Compared with the third or fourth display mode, because the difference area shows/represents an obstacle boundary which is a boundary of the obstacle O close to the safe area SA, a relationship between a boundary of an obstacle O and the safe area SA can be better displayed in the fifth display mode of replacing the obstacle area OA and/or the modified area MA with the difference area. That is, the driver can determine whether any obstacle O invades the safe area SA more intuitively, directly and effectively by this mode.

In the sixth display mode, in a situation that no invasion event occurs (that is, the safe area SA is entirely included in the modified area MA), a corresponding image is displayed in the first display mode (as shown in FIG. 2); and in a situation that an invasion event occurs (that is, the safe area SA cannot be entirely included in the modified area MA), a corresponding image is displayed in one of the second, third, fourth and fifth display modes (as shown in FIGs. 6-7). That is, the corresponding auxiliary area is displayed only when the invasion event occurs, so that the corresponding input image I has no excessive unnecessary information, and hence to enhance user experience of the driver.

Optionally, in said display method, in a situation that the invasion event occurs (that is, the safe area SA cannot be entirely included in the modified area MA), an invading area, intersected by the difference area and the safe area SA, is continuously displayed or flashes with a preset color, particularly the preset color is chosen and varied to be distinct from colors of around the invading area, to prominently display the invasion area where the obstacle O invades into the safe area SA.

It should be noted, to facilitate understanding of the technical content of the present invention, the input image I in the present invention is an image with a specific viewing direction from an outward lateral viewing direction (especially a left side viewing direction) of the driving target T; however, the input image I is not limited to said single and specific viewing direction shown in the drawings, and it can be understood that all technical contents and features of the present invention may be applied to images with various viewing directions, and an image generated/synthesized by images with multiple viewing directions (such as, a surrounding image or a panoramic image) is included.

In addition, it should be noted, to facilitate understanding of the technical content of the present invention, the driving target T in the present invention is a conveyance (vehicle) on land by way of example, but the technical content of the present invention (including at least a safe area SA and a modified area MA) may be applied to driving targets T in different types, for example, conveyances in air, on water or underwater.

In summary, according to the monitoring method for a safe area and the safety system of the present invention, by the characteristic that a boundary of the generated modified area with its contour and position is very close to and highly relative to a boundary of the obstacle, the determination whether an obstacle invades into the safe area in the input image can be more accurately made through a relationship between the safe area and the modified area or through a relationship among the safe area, the modified area and the obstacle area. Therefore, erroneous determination can be reduced, and accuracy and reliability of the monitoring method can be accordingly improved to enhance the driving safety. In addition, based on the monitoring method for a safe area of the present invention, the display method of the present invention is proposed and includes multiple display modes for the driver to choose to enhance user experience.

## Claims

1. A monitoring method for a safe area, performed by a processing module (2) having a processor and a pre-established image identification model, comprising the following steps:
obtaining an input image (I), wherein the input image (I) is generated from a driving target (T) in a predefined viewing direction, and the input image (I) has an image corresponding to an obstacle (O);
generating a safe area (SA) to a periphery of an image of the driving target (T) in the input image (I); and
**characterized in**:
generating a predetermined route (R) on the periphery of the image of the driving target (T), and defining a continuous area that does not belong to the obstacle (O) from a predetermined range extended from the predetermined route (R) to generate a modified area (MA), wherein in a situation that the predetermined range includes a part of an obstacle (O), a part of a boundary of the modified area (MA) corresponds to a part of a contour of the obstacle (O); and
determining whether the safe area (SA) is entirely included in the modified area (MA); wherein in a result of the determination is that the safe area (SA) is not entirely included in the modified area (MA), the obstacle (O) has invaded the safe area (SA).

2. The monitoring method for a safe area as claimed in claim 1, **characterized in that** before determining whether the safe area (SA) is entirely included in the modified area (MA), the method further comprises: identifying the obstacle (O) from the input image (I) by the image identification model to generate an obstacle area (OA) corresponding to the obstacle (O), and determining whether an intersection exists between the safe area (SA) and the obstacle area (OA); in a result of the determination is that the intersection exists, then determining whether the safe area (SA) is entirely included in the modified area (MA).

3. The monitoring method for a safe area as claimed in claim 1 or 2, **characterized in that** a determining manner (DM1) is applied to determine whether the safe area (SA) is entirely included in the modified area (MA), and the determining manner (DM1) is determining whether an area size mutually intersected by the modified area (MA), the safe area (SA) and an obstacle area (OA) is equal to an area size intersected by the safe area (SA) and the obstacle area (OA); in a result of the determination is equal, the obstacle (O) has not invaded the safe area (SA); and in a result of the determination is not equal, the obstacle (O) has invaded the safe area; wherein, the obstacle area (OA) is generated by the image identification model through identifying the obstacle (O) from the input image (I).

4. The monitoring method for a safe area as claimed in claim 1 or 2, **characterized in that** a determining manner (DM2) is applied to determine whether the safe area (SA) is entirely included in the modified area (MA), and the determining manner (DM2) is determining whether an area size intersected by the modified area (MA) and the safe area (SA) is equal to an area size of the safe area (SA); in a result of the determination is equal, the obstacle (O) has not invaded the safe area (SA); and in a result of the determination is not equal, the obstacle (O) has invaded the safe area (SA).

5. The monitoring method for a safe area as claimed in claim 1 or 2, **characterized in that** a determining manner (DM3) is applied to whether the safe area (SA) is entirely included in the modified area (MA), and the determining manner (DM3) is determining whether an intersection exists between a difference area and the safe area (SA), and the difference area is defined by an area subtracting the modified area (MA) from the input image (I); in a result of the determination is that the intersection does not exist, the obstacle (O) has not invaded the safe area (SA); and in a result of the determination is that the intersection exists, the obstacle (O) has invaded the safe area (SA).

6. The monitoring method for a safe area as claimed in any one of claims 1-5, **characterized in that** in a process of generating the modified area (MA), the continuous area is defined by all pixel points generated from each route pixel point (P_{R}) on the predetermined route (R) extending to a boundary pixel point (P_{B}) in a first direction (x); wherein each boundary pixel point (P_{B}) is defined by determining whether an extended pixel point (P_{E}) extended by each route pixel point (P_{R}) on the predetermined route (R) in the first direction (x) is an obstacle pixel point corresponding to the obstacle (O); in a situation that an extended pixel point (P_{E}) extended by a route pixel point (P_{R}) on the predetermined route (R) in the first direction (x) is determined as the obstacle pixel point, a boundary pixel point (P_{B}) is defined by a pixel point adjacent to or directly belonging to the extended pixel point (P_{E}) initially determined as the obstacle pixel point; in a situation that all extended pixel points (P_{E}) extended by a route pixel point (P_{R}) on the predetermined route (R) in the first direction (x) are determined not belonging to the obstacle pixel point, a boundary pixel point (P_{B}) is defined by the extended pixel point (P_{E}) determined as a pixel point on a boundary of the input image (I); and the continuous area is defined by all of the route pixel points (P_{R}), the extended pixel points (P_{E}) and the boundary pixel points (P_{B}) to correspondingly generate the modified area (MA).

7. The monitoring method for a safe area as claimed in claim 6, **characterized in that** in the situation that the extended pixel point (P_{E}) extended by the route pixel point (P_{R}) on the predetermined route (R) in the first direction (x) is determined as the obstacle pixel point, the boundary pixel point (P_{B}) is defined by another extended pixel point (P_{E}) preceding the extended pixel point (P_{E}) initially determined as the obstacle pixel point.

8. The monitoring method for a safe area as claimed in any one of claims 1 to 7, **characterized in that** a range of the continuous area is limited in the safe area (SA).

9. The monitoring method for a safe area as claimed in any one of claims 1-8, **characterized in that** an entirety or a part of an image area size of the safe area (SA) of the driving target (T) changes with a driving condition, and the driving condition comprises at least one of a traveling speed, a traveling direction, a current driving scene and a turning signal.

10. A safety system applied to a driving target and comprising:
an image capturing unit (1), arranged on the driving target (T) and configured to obtain an input image (I) of a peripheral environment of the driving target (T); and
**characterized in** comprising:
a processing module (2), coupled to the image capturing unit (1), wherein the processing module (2) has a processor and a pre-established image identification model and is configured to receive the input image (I) and perform the monitoring method for a safe area according to any one of claims 1-9.

11. The safety system according to claim 10, **characterized in** further comprising at least one of a warning device (3), a steering system (4), a braking system (5) and a transmission system (6), coupled to the processing module (2).

12. A displaying method, **characterized in** comprising:
presenting an information in the monitoring method for a safe area according to any one of claims 1-9 on a display;
wherein, the information includes the input image (I), and further includes at least one of the safe area (SA), an obstacle area (OA) of the obstacle (O), the modified area (MA) and a difference area which is defined by an area subtracting the modified area (MA) from the input image (I).

13. The displaying method according to claim 12, **characterized in that** in a result of determination is that the safe area (SA) is not entirely included in the modified area (MA), an invading area, intersected by the difference area and the safe area (SA), is continuously displayed or flashes with a preset color.
